# EUROPÄISCHE PATENTSCHRIFT

(11) **EP 3 835 200 B1**
(45) Veröffentlichungstag und Bekanntmachung des Hinweises auf die Patenterteilung: **20.03.2024**
(21) Anmeldenummer: 20212918.5
(22) Anmeldetag: 09.12.2020
(51) Int. Cl.: B64C 13/28, B64D 45/00

(54) **ÜBERWACHUNGSSYSTEM FÜR EINE ANORDNUNG MIT KINEMATISCHER KOPPLUNG**
MONITORING SYSTEM FOR AN ARRANGEMENT WITH KINEMATIC COUPLING
SYSTÈME DE SURVEILLANCE POUR UN AGENCEMENT À ACCOUPLEMENT CINÉMATIQUE

(30) Priorität: 12.12.2019 DE 102019134215
(43) Veröffentlichungstag der Anmeldung: 16.06.2021
(73) Patentinhaber: Airbus Defence and Space GmbH, 82024 Taufkirchen (DE)
(72) Erfinder: Köhler, Thomas, 82024 Taufkirchen (DE)
(74) Vertreter: LKGLOBAL Lorenz & Kopf Patentanwalt Attorney at Law PartG mbB

(56) Entgegenhaltungen:
- EP-A1- 3 012 192
- US-A1- 2013 026 287
- US-A1- 2018 029 690
- US-A1- 2019 144 135

## Beschreibung

### Technisches Gebiet

Die Beschreibung betrifft ein System zum Überwachen der Güte einer kinematischen Kopplung zwischen einem Stellglied und einem von dem Stellglied gesteuerten Element. Allgemein betrifft die Beschreibung also ein Überwachungssystem für eine kinematische Kopplung. Daneben betrifft die Beschreibung sicherheitsrelevante Systeme mit einem solchen Überwachungssystem, insbesondere ein Luftfahrzeug mit einem Überwachungssystem.

### Technischer Hintergrund

In einer Vielzahl von technischen Systemen werden kinematische Kopplungen verwendet, um Bewegung von einer Eingangsseite auf eine Ausgangsseite zu übertragen. Auf der Eingangsseite ist typischerweise ein Stellglied oder ein Antrieb angeordnet, wohingegen auf der Ausgangsseite ein gesteuertes oder bewegtes Element angeordnet ist. Das Stellglied erzeugt eine Bewegung und eine kinematische Kopplung überträgt diese Bewegung auf das gesteuerte Element.

In nahezu sämtlichen Systemen, in denen eine Bewegung stattfindet, zeigt sich über die Nutzungsdauer dieser Systeme ein mehr oder weniger ausgeprägter Verschleiß. Typischerweise findet ein solcher Verschleiß in der kinematischen Kopplung statt. Der Verschleiß kann aber auch auf das Stellglied oder auf das gesteuerte Element wirken.

Jedenfalls kann Verschleiß an jeder der genannten Stellen dazu führen, dass eine Bewegung des Stellgliedes auf der Eingangsseite nicht mehr direkt mit einer Bewegung des gesteuerten Elements auf der Ausgangsseite korreliert oder dass sich das gesteuerte Element beim Einwirken von äußeren Kräften auf das gesteuerte Element bewegt, ohne dass sich das Stellglied auf der Eingangsseite bewegt. In diesem Zustand des Systems, welches aus Stellglied, kinematischer Kopplung und gesteuertem Element besteht, kann man sagen, dass das System Spiel aufweist.

Um Spiel in einem System zu identifizieren, werden komplexe oder sicherheitsrelevante Systeme in regelmäßigen zeitlichen Abständen einer Überprüfung und Wartung unterzogen. Dabei werden die für Spiel anfälligen Systeme oder Subsysteme untersucht und bei Bedarf neu eingestellt, um das Spiel aus dem System zu entfernen.

US 2018/0029690 A1 beschreibt ein System zum Überwachen von unbeabsichtigten Bewegungen von Stellflächen in Flugzeugen. Die Position von Stellgliedern und der zugehörigen Stellfläche wird überwacht.

EP 3 012 192 A1 beschreibt ein Flugzeug mit einem System zum Überwachen des Status von Stellflächen. Die Position, insbesondere die Winkelposition, einer Antriebswelle der Stellflächen wir erfasst und mit einer Stellung der Stellflächen verglichen. Indem an den Stellflächen die Position von zwei Punkten der Stellflächen erfasst wird, kann ein Verkanten der Stellflächen erkannt werden.

### Darstellung der Erfindung

Es kann als Aufgabe der Erfindung betrachtet werden, die Überwachung von sicherheitsrelevanten Systemen, die eine kinematische Kopplung enthalten, zu verbessern.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Gemäß der Erfindung ist ein Überwachungssystem zum Überwachen einer kinematischen Kopplung zwischen einem Stellglied und einem gesteuerten Element eines Luftfahrzeugs angeben. Das Überwachungssystem weist einen ersten Sensor, einen zweiten Sensor, und eine Recheneinheit auf. Der erste Sensor ist so angeordnet, dass er eine Wirkbewegung des Stellgliedes erfasst und basierend auf der erfassten Wirkbewegung des Stellgliedes ein erstes Signal bereitstellt. Der zweite Sensor ist so angeordnet, dass er eine Bewegung des gesteuerten Elements erfasst und basierend auf der erfassten Bewegung des gesteuerten Elements ein zweites Signal bereitstellt. Die Recheneinheit ist mit dem ersten Sensor und dem zweiten Sensor verbunden und ist ausgestaltet, das erste Signal und das zweite Signal zu empfangen. Die Recheneinheit ist ferner ausgestaltet, basierend auf dem ersten Signal eine erwartete Bewegung des gesteuerten Elements zu ermitteln und die erwartete Bewegung mit der dem zweiten Signal entsprechenden erfassten Bewegung zu vergleichen und eine Abweichung zwischen der erwarteten Bewegung und der erfassten Bewegung bereitzustellen. Die Recheneinheit ist ausgestaltet, eine Aufgabe teilweise zu übernehmen, welche üblicherweise in vorgegebenen Wartungsintervallen am Boden durch ein gesondertes Testgerät ausgeführt wird, und diese Aufgabe während eines Betriebs des Luftfahrzeugs in der Luft auszuführen. Die Recheneinheit ist ausgestaltet, bei einer einen Schwellwert übersteigenden Abweichung zwischen der erwarteten Bewegung und der erfassten Bewegung einen Hinweis auf diese Abweichung auszugeben, welcher veranlasst, dass das Luftfahrzeug einer detaillierten Überprüfung zugeführt wird.

Das hierin beschriebene Überwachungssystem dient dazu, ein kinematisches System und die Bewegung der Bestandteile dieses kinematischen Systems zu überwachen. Typischerweise besteht ein kinematisches System aus einem Antrieb (Stellglied), einer kinematischen Kopplung, und einem gesteuerten Element. Die kinematische Kopplung ist mit dem Stellglied und dem gesteuerten Element so verbunden, dass eine Bewegung des Stellgliedes auf das gesteuerte Element übertragen wird. Die Bewegung des Stellgliedes kann über die kinematische Kopplung mit oder ohne Übersetzung auf das gesteuerte Element übertragen werden. Eingangsseitig kann das Stellglied beispielsweise mittels Stangen, Hebeln und Gelenken oder Scharnieren mit der kinematischen Kopplung verbunden sein, um Kräfte, z.B. Zug- und/oder Druckkräfte, auf die kinematische Kopplung zu übertragen. Ausgangsseitig ist die kinematische Kopplung beispielsweise ebenfalls mittels Stangen, Hebeln und Gelenken oder Scharnieren mit dem gesteuerten Element verbunden, um Kräfte, z.B. Zug- und/oder Druckkräfte, auf das gesteuerte Element zu übertragen.

Die kinematische Kopplung kann eine translatorische oder rotatorische Bewegung von dem Stellglied auf das gesteuerte Element übertragen. Hierfür kann die kinematische Kopplung verschiedene Elemente aufweisen, um die Übertragung der Bewegung zu bewerkstelligen, nämlich: Stangen, Hebel, Gelenke, Seile, Rollen, Zahnräder oder dergleichen.

Das hierin beschriebene Überwachungssystem kann vorteilhafterweise dort eingesetzt werden, wo eine Bewegung des Stellgliedes in sehr hohem Maße und mit einer hohen Genauigkeit mit einer Bewegung des gesteuerten Elements korrelieren muss und ein Spiel, welches aus einem der Bestandteile des kinematischen Systems resultiert, höchst unerwünscht ist. Je nach Ausgestaltung des Stellgliedes kann bei dem Stellglied als solches ein Spiel sehr stark reduziert oder sogar ausgeschlossen werden. So zeichnen sich beispielsweise hydraulische Stellglieder als wenig oder gar nicht anfällig für Spiel aus. Ebenso kann das gesteuerte Element so ausgestaltet sein, dass ein Spiel reduziert oder nahezu ausgeschlossen ist. Somit verbleibt als Hauptquelle für Spiel in einem kinematischen System im Wesentlichen die kinematische Kopplung. Das hierin beschriebene Überwachungssystem eignet sich, Spiel in einem kinematischen System zu identifizieren, unabhängig davon, wo dieses Spiel in das System eingebracht wird.

Das Überwachungssystem setzt darauf, dass die Bewegung des gesteuerten Elements zusätzlich und gesondert durch den zweiten Sensor erfasst wird. Diese tatsächliche Bewegung oder erfasste Bewegung des gesteuerten Elements wird mit einer erwarteten Bewegung des gesteuerten Elements verglichen, wobei die erwartete Bewegung des gesteuerten Elements basierend auf der Bewegung des Stellgliedes bestimmt wird. In anderen Worten wird also die Bewegung des gesteuerten Elements auf zwei Arten bestimmt: einmal als erwartete Bewegung basierend auf der Bewegung des Stellgliedes und zusätzlich als direkte Erfassung seiner tatsächlichen Bewegung mittels des zweiten Sensors.

Um die erwartete Bewegung des gesteuerten Elements zu ermitteln, nutzt die Recheneinheit eine Ausgangsposition und/oder eine Positionsänderung eines Stellelements des Stellgliedes. Das Stellelement des Stellgliedes stellt die Schnittstelle des Stellgliedes zu der kinematischen Kopplung dar und kann beispielsweise als Stange zum Übertragen von Zug- und Druckkräften oder als Seil zum Übertragen von Zugkräften ausgestaltet sein.

Der erste Sensor ist an dem Stellglied oder an dem Stellelement des Stellgliedes oder an der Umgebung des Stellgliedes angeordnet, um eine auf die kinematische Kopplung übertragene Bewegung zu ermitteln und in ein Messsignal, das heißt das erste Signal, umzuwandeln. Das erste Signal gibt demnach eine Position oder eine Änderung der Position des Stellelements des Stellgliedes an.

Der zweite Sensor ist mit dem gesteuerten Element oder mit einer Umgebung des gesteuerten Elements gekoppelt, so dass die Bewegung des gesteuerten Elements erfasst werden kann. Auch für den zweiten Sensor gilt, dass die erfasste Bewegung in ein Messsignal umgewandelt wird, wobei dieses Messsignal als zweites Signal bezeichnet wird. Der zweite Sensor kann beispielsweise an dem gesteuerten Element angeordnet sein. Wenn sich das gesteuerte Element bewegt, kann der zweite Sensor diese Bewegung aufgrund seiner geänderten Position oder Orientierung mit Bezug zu der Umgebung erfassen. Der zweite Sensor kann ebenso an einem Punkt der Umgebung des gesteuerten Elements angeordnet sein, so dass sich das gesteuerte Element mit Bezug zu dem zweiten Sensor bewegt. Jedenfalls dient das zweite Signal dazu, die tatsächliche Bewegung des gesteuerten Elements anzuzeigen.

Abweichungen zwischen erwarteter und erfasster Bewegung kommen insbesondere dann vor, wenn eine Systemkomponente wie beispielsweise die kinematische Kopplung mechanisches Spiel hat. Ebenso ist es möglich, wenn die kinematische Kopplung Spiel hat, dass sich das gesteuerte Element unter dem Einfluss von äußeren Kräften bewegt ohne dass diese Bewegung von dem Stellglied vorgegeben oder veranlasst wird. Auch dieser Fall stellt eine Abweichung zwischen erwarteter und erfasster Bewegung dar. Die Abweichung kann als Differenz zwischen den zwei Signalen ermittelt werden. Die erwartete Bewegung ist null, weil das Stellglied keine Bewegung vorgegeben hat, wohingegen die erfasste Bewegung eine tatsächliche Bewegung des gesteuerten Elements darstellt.

Das Stellglied kann ein hydraulisches Element, ein mechanischer Antrieb oder ein elektro-mechanischer Antrieb sein. Das Stellglied ist beispielsweise ausgestaltet, ein Kommandosignal zu empfangen und eine dem Kommandosignal entsprechende Wirkbewegung zu erzeugen. Unter der Maßgabe, dass zwischen dem Kommandosignal und der Wirkbewegung ein direkter Zusammenhang besteht, ist es auch denkbar, dass das Kommandosignal für den Vergleich mit der erfassten Bewegung des gesteuerten Elements verwendet wird.

Ein Gedanke des hierin beschriebenen Überwachungssystems ist, dass das überwachte System während seiner Betriebszeit einer dauerhaften Überwachung unterzogen wird. Dauerhafte Überwachung bedeutet dabei, dass die ausgehend von der Wirkbewegung des Stellgliedes erwartete Bewegung des gesteuerten Elements wiederkehrend in regelmäßigen oder unregelmäßigen Zeitabständen mit der tatsächlichen Bewegung des gesteuerten Elements verglichen wird und im Falle von Abweichungen (Differenz zwischen erwarteter und tatsächlicher Bewegung bzw. zwischen den entsprechenden Signalen) eine entsprechende Meldung bereitgestellt wird. Gerade bei sicherheitskritischen Anwendungen ist dies hilfreich, weil das Spiel in einem kinematischen System nicht nur in den vorgesehenen Wartungsintervallen, sondern dauerhaft überwacht wird. Dies kann insbesondere dort hilfreich sein, wo ein Spiel aufgrund hoher Kräfte von außen zu einem raschen und starken Verschleiß des Systems bis hin zu seiner Zerstörung führen kann.

In einer Ausführungsform ist die Recheneinheit ausgestaltet, die Abweichung zwischen der erwarteten Bewegung und der erfassten Bewegung mit einem Schwellwert zu vergleichen und eine Fehlermeldung auszugeben, wenn die Abweichung den Schwellwert erreicht oder überschreitet.

Insbesondere wird der Betrag der Abweichung zwischen der erwarteten Bewegung und der erfassten Bewegung mit dem Schwellwert verglichen. In der Regel ist allein die Information ausreichend, dass es eine Abweichung gibt, wohingegen die Richtung der Abweichung (positiv oder negativ) zunächst irrelevant ist. In nachfolgenden Mess- und Überprüfungsschritten kann dann die Abweichung genauer untersucht werden.

Bei einer Schwenkbewegung des gesteuerten Elements kann der Schwellwert für die Abweichung als Winkel angegeben werden. In sicherheitskritischen Umgebungen kann dieser Schwellwert sehr niedrig sein, beispielsweise wenige Millirad (mrad). Es ist aber genauso denkbar, dass der Schwellwert als absolute Auslenkung (Millimeter oder Zentimeter), um die die tatsächliche Bewegung von der erwarteten Bewegung an einem Punkt des gesteuerten Elements abweicht, definiert ist.

In einer weiteren Ausführungsform ist die Recheneinheit ausgestaltet, die erwartete Bewegung des gesteuerten Elements basierend auf einem Modell der kinematischen Kopplung zu bestimmen.

Beispielsweise kann das Überwachungssystem in einem Flugzeug verwendet werden, um die Bewegung von Steuerflächen basierend auf Bewegungen von Stellgliedern zu überprüfen bzw. zu überwachen. Von dem Flugzeug liegt ein Modell vor, welches von einer Steuerung oder der Recheneinheit genutzt wird, um die Reaktion von gesteuerten Elementen auf eine Eingabe (d.h. das an das Stellglied übertragene Kommandosignal) zu berechnen. Wird beispielsweise ein Aktuator, der als Stellglied einer Steuerfläche fungiert, betätigt, so kann mit dem Modell des Flugzeugs berechnet werden, wie die Steuerfläche auf eine Eingabe an das Stellglied reagiert. Diese Berechnung entspricht der erwarteten Bewegung des gesteuerten Elements, d.h. der Steuerfläche. Das Modell kann sich dabei auf die kinematische Kopplung zwischen Stellglied und gesteuertem Element beziehen, kann aber auch ein Modell einer übergeordneten Anordnung sein, welche das Stellglied, das gesteuerte Element, und die kinematische Kopplung zwischen Stellglied und gesteuertem Element enthält.

In einer weiteren Ausführungsform ist sowohl der erste Sensor als auch der zweite Sensor ein Sensor, der ausgewählt ist aus der Gruppe umfassend: einen Bewegungssensor, einen Drehratensensor, einen Rotationspositionssensor, einen Winkelsensor, einen linearen variablen Differenzialtransformator, einen optischen Sensor, einen mechanischen Sensor mit beweglichen Teilen, einen magnetischen Sensor, einen Hall-Effekt-Sensor.

Insgesamt kann jeder Sensor verwendet werden, welcher geeignet und ausgestaltet ist, eine translatorische oder rotatorische Bewegung des Stellelements des Stellgliedes und/oder des gesteuerten Elements zu erfassen und ein der erfassten Bewegung entsprechendes Signal zu erzeugen und bereitzustellen.

In einer weiteren Ausführungsform ist der zweite Sensor ausgestaltet, die Bewegung des gesteuerten Elements mit einer Abtastrate von mehr als 1 kHz zu erfassen.

Das Überwachungssystem ist in dieser Ausführungsform also dafür ausgelegt, rasche und hochfrequente Bewegungen und/oder Schwingungen des gesteuerten Elements zu erfassen, wie sie beispielsweise vorkommen, wenn eine Steuerfläche bei einem Flugzeug unter dem Einfluss der auf sie wirkenden Luftströmung schwingt oder vibriert, wenn die Kinematik, die die Steuerfläche bewegt oder in einer Position hält, Spiel hat. Sowohl der zweite Sensor als auch die Recheneinheit müssen dafür ausgelegt sein, die Abtastrate von mehreren kHz (1 kHz bis hin zu mehreren 10 kHz) zu leisten und die dadurch anfallenden Daten verarbeiten zu können.

In einer weiteren Ausführungsform ist die Recheneinheit ausgestaltet, das zweite Signal einem Filter zuzuführen und das gefilterte Signal für den Vergleich mit dem ersten Signal zu verwenden.

Somit können aus dem zweiten Signal Last- und Bewegungsspitzen herausgefiltert werden, welche ggf. aus einer zeitlich stark begrenzten hohen äußeren Kraft resultieren, aber nicht einem Spiel in der Kinematik zuzuordnen sind. Bei sehr hohen äußeren Kräften kann es zu einer Bewegung des gesteuerten Elements kommen einfach aufgrund von elastischer Verformung, auch ohne dass sich das Stellglied bewegt.

Als Filter kann beispielsweise ein Tiefpassfilter, ein Kalmanfilter, ein Wienerfilter oder ein Korrelationsalgorithmus verwendet werden. Bevorzugt ist ein solches Filter als digitaler Filteralgorithmus ausgestaltet und kann in der Recheneinheit als gesondertes Filtermodul implementiert sein.

Gemäß einem weiteren Aspekt ist ein Luftfahrzeug angegeben, welches ein Überwachungssystem gemäß einer oder mehrerer hierin beschriebener Ausführungsformen des Überwachungssystems aufweist.

Das Überwachungssystem kann insbesondere in sicherheitsrelevanten Umgebungen zum Einsatz kommen. Hierbei kann es sich um Luftfahrzeuge handeln. Aber auch andere Anwendungsbereiche mit hohen Sicherheitsanforderungen und damit einhergehenden Anforderungen an die Genauigkeit und das Funktionieren einer kinematischen Kopplung zwischen einem Stellglied und einem davon gesteuerten Element sind möglich.

Beispielsweise kann das Überwachungssystem in industriellen Anlagen oder Wasserfahrzeugen verwendet werden. In industriellen Anlagen kann das Überwachungssystem beispielsweise in Verbindung mit Schleusen oder Ventilen verwendet werden, deren erwartete Öffnung mit der tatsächlichen Öffnung verglichen wird. Im Kontext von Wasserfahrzeugen kann das Überwachungssystem ähnlich verwendet werden wie bei Luftfahrzeugen, nämlich dazu, um bewegliche Elemente, die der Wasserströmung (oder der Luftströmung) ausgesetzt sind und von einem Stellglied bewegt werden können, zu überwachen.

Bei dem Luftfahrzeug kann es sich um Flugzeuge, Hubschrauber, oder Drohnen handeln. Insbesondere kann das Überwachungssystem verwendet werden, um eine erwartete Bewegung eines der Luftströmung ausgesetzten Elements mit einer tatsächlichen Bewegung dieses Elements zu vergleichen.

In einer Ausführungsform des Luftfahrzeugs ist das gesteuerte Element eine Steuerfläche des Luftfahrzeugs und das Stellglied ist ein mit der Steuerfläche über eine kinematische Kopplung verbundener Aktuator.

Bei dem Aktuator kann es sich um ein hydraulisches, mechanisches oder elektromechanisches Element handeln, welches in der Lage ist, eine Bewegung auszuführen, damit diese Bewegung über die Kinematik auf die Steuerfläche übertragen werden kann und eine Bewegung der Steuerfläche verursacht.

Bei der Steuerfläche kann es sich beispielsweise um ein Ruder oder eine Klappe eines Flugzeugs handeln, z.B. ein Höhenruder, Querruder, Seitenruder, Canard, eine Trimmklappe, die einem dieser Ruder zugeordnet ist, oder auch um eine Landeklappe. Allgemein kann das Überwachungssystem verwendet werden, um jegliche beweglichen Elemente in einem Luftfahrzeug (und/oder anderen sicherheitsrelevanten Systemen) zu überwachen und deren tatsächliche Bewegung mit der angeforderten Bewegung (d.h. der Soll-Bewegung, die unter gewöhnlichen Bedingungen der Bewegung des Aktuators entspricht) zu vergleichen und im Falle einer Abweichung eine Meldung auszugeben.

In einer weiteren Ausführungsform des Luftfahrzeugs ist der zweite Sensor angeordnet, um eine Relativbewegung zwischen der Steuerfläche und einem Rumpf oder einer anderen mit dem Rumpf verbundenen Komponente des Luftfahrzeugs zu erfassen.

Wenn die Steuerfläche ein Ruder ist, wird insbesondere die Relativbewegung zwischen Ruder und Flügel (Querruder oder Landeklappe relativ Flügel, Höhenruder relativ zu Höhenflosse, Seitenruder relativ zu Seitenflosse) erfasst. Wenn es sich bei der Steuerfläche um eine an einem Ruder angebrachte Trimmklappe handelt, kann insbesondere die Relativbewegung zwischen Trimmklappe und zugehörigem Ruder erfasst werden.

In dieser Ausführungsform ist der zweite Sensor insbesondere ausgestaltet, um eine Schwenkbewegung der Steuerfläche zu erfassen. Der zweite Sensor ist beispielsweise als Winkelsensor, der eine Schwenkbewegung um ein Gelenk der Steuerfläche erfasst, oder als Auslenksensor, der eine absolute Auslenkung der Steuerfläche erfasst, ausgestaltet. Der zweite Sensor ist so angebracht, dass er eine Bewegung der Steuerfläche relativ zu ihrer Umgebung (Rumpf, Flosse, Flügel) oder in einem Gelenk, mit dem die Steuerfläche an ihrer Umgebung angebracht ist, erfassen kann.

In einer weiteren Ausführungsform des Luftfahrzeugs implementiert die Recheneinheit Funktionen der Flugsteuerung für das Luftfahrzeug.

Die Recheneinheit kann in einem Beispiel ein Computer sein, welcher Funktionen der Steuerung des Luftfahrzeugs ausführt. Dieser Computer kann seinerseits die Funktionalität der hierin beschriebenen Recheneinheit ausführen. Daneben kann der Computer noch andere Funktionen der Luftfahrzeugsteuerung übernehmen. Alternativ ist es auch möglich, die Funktionen des Recheneinheit von den übrigen Funktionen der Luftfahrzeugsteuerung physikalisch zu trennen, d.h. auf zwei voneinander getrennten Computern auszuführen. Diese Alternative hat den Vorteil, dass das Überwachungssystem in ein bestehendes Luftfahrzeug nachgerüstet werden kann, ohne dass in die bestehenden Systeme eingegriffen werden muss. Lediglich das existierende Steuersignal an den Aktuator bzw. der Messwert des dem Aktuator zugeordneten Sensors muss abgegriffen werden.

Erfindungsgemäß wird durch das hierin beschriebene Überwachungssystem eine Aufgabe, welche üblicherweise in vorgegebenen Wartungsintervallen am Boden durch ein gesondertes Testgerät ausgeführt wird, teilweise in ein Luftfahrzeug verlagert und in dem Luftfahrzeug während des Betriebs, d.h. in der Luft, ausgeführt. Das Überwachungssystem vergleicht laufend die erwartete Bewegung einer Steuerfläche mit der tatsächlichen Bewegung dieser Steuerfläche und ist in der Lage, bei einer Abweichung, die einen Schwellwert übersteigt, einen Hinweis auf diese Abweichung auszugeben. Sodann kann das Luftfahrzeug einer detaillierten Überprüfung zugeführt werden.

### Kurze Beschreibung der Figuren

Nachfolgend wird anhand der beigefügten Zeichnungen näher auf Ausführungsbeispiele der Erfindung eingegangen. Die Darstellungen sind schematisch und nicht maßstabsgetreu. Gleiche Bezugszeichen beziehen sich auf gleiche oder ähnliche Elemente. Es zeigen:
- **Fig.** 1: eine schematische Darstellung eines kinematischen Systems mit einem ersten Sensor und einem zweiten Sensor.
- **Fig. 2**: eine schematische Darstellung einer Steuerung und eines davon gesteuerten Stellgliedes mit einem ersten Sensor.
- **Fig. 3**: eine schematische Darstellung einer Recheneinheit, welche mit einem ersten Sensor und einem zweiten Sensor verbunden ist.
- **Fig. 4**: eine schematische Darstellung eines Luftfahrzeugs mit einem Überwachungssystem für die Bewegung einer Steuerfläche.

### Detaillierte Beschreibung von Ausführungsbeispielen

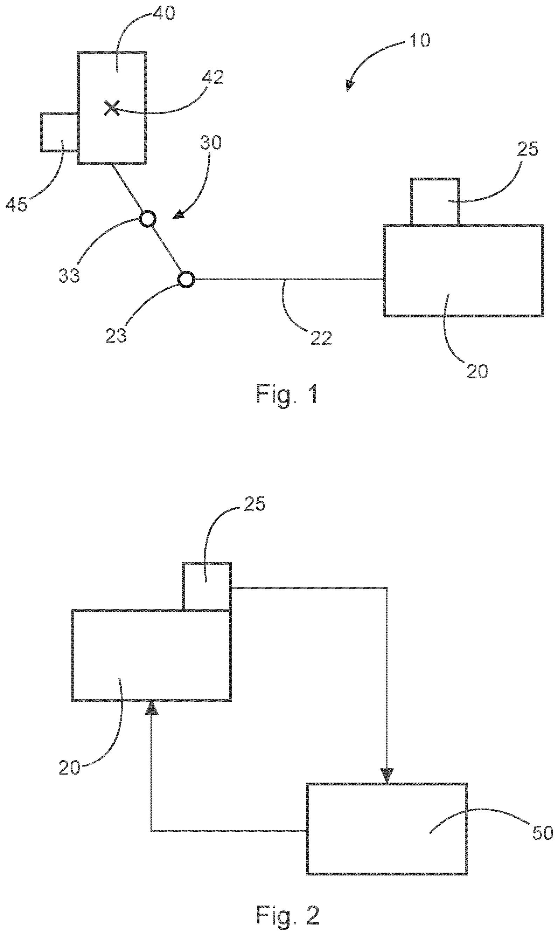

Fig. 1 zeigt ein Überwachungssystem 10 für ein kinematisches System. Das kinematische System besteht aus einem Stellglied 20, einer kinematischen Kopplung 30 und einem gesteuerten Element 40. Das Stellglied 20 ist mit einem Stellelement 22 über ein Gelenk 23 mit der kinematischen Kopplung 30 verbunden. Somit können Wirkbewegungen des Stellgliedes 20 über das Stellelement 22 auf die kinematische Kopplung 30 übertragen werden. Das Stellglied 20 und seine Verbindung zu der kinematischen Kopplung 30 stellt die Eingangsseite des kinematischen Systems dar.

Die kinematische Kopplung 30 kann aus einer Vielzahl von miteinander gekoppelten beweglichen mechanischen Elementen bestehen, beispielsweise Hebel, Gelenke, Stangen, Seile, Rollen, Zahnrädern und dergleichen. In Fig. 1 jedenfalls ist die kinematische Kopplung 30 vereinfacht dargestellt mit einem Hebel, welcher an einem Gelenk bzw. Drehpunkt 33 befestigt und um diesen Drehpunkt 33 drehbar gelagert ist.

In dem in Fig. 1 gezeigten Beispiel ist die kinematische Kopplung 30 unmittelbar mit dem gesteuerten Element 40 verbunden. Eine Bewegung, welche über die kinematische Kopplung 30 übertragen wird, wirkt sich somit auf das gesteuerte Element 40 aus. Das gesteuerte Element 40 und seine Verbindung mit der kinematischen Kopplung 30 stellt die Ausgangsseite des kinematischen Systems dar.

In dem in Fig. 1 gezeigten Beispiel kann das Stellglied 20 über das Stellelement 22 eine translatorische Bewegung (in Fig. 1 nach links oder nach rechts) auf die kinematische Kopplung geben. Der Hebel der kinematischen Kopplung schwenkt um den Drehpunkt 33. Diese Schwenkbewegung wird ihrerseits auf das gesteuerte Element 40 gegeben und kann das gesteuerte Element 40 translatorisch oder rotatorisch bewegen, beispielsweise indem eine Drehbewegung um den Drehpunkt 42 verursacht wird.

Kinematische Systeme können in hochsensiblen bzw. hochpräzisen Systemen, beispielsweise Luftfahrzeugen, verwendet werden. Wie weiter oben beschrieben, stellt die Ansteuerung von Steuerflächen eines Luftfahrzeugs ein kinematisches System dar.

Die Eingangsseite des kinematischen Systems ist mit der Ausgangsseite des kinematischen Systems wirkverbunden. Das bedeutet, dass eine auf der Eingangsseite eingespeiste Wirkung sich auf der Ausgangsseite bemerkbar macht. Zwischen der auf der Eingangsseite eingespeisten Wirkung (Bewegung) und der auf der Ausgangsseite erfolgten Wirkung (Bewegung) herrscht ein strenger Zusammenhang: (1) eine auf der Eingangsseite eingespeiste Wirkung führt zu einer vorhersagbaren Wirkung auf der Ausgangsseite und (2) ohne eine auf der Ausgangsseite eingespeiste Wirkung gibt es auf der Ausgangsseite ebenfalls keine Wirkung, d.h. die Ausgangsseite hält eine vorliegende Position. Spiel in dem kinematischen System führt dazu, dass dieser Zusammenhang so nicht mehr gegeben ist. Im Falle von Spiel ist nicht mehr vorhersagbar, wie die Wirkung auf der Ausgangsseite bei einer bestimmten auf der Eingangsseite eingespeisten Wirkung ausfällt und es kann dazu kommen, dass sich das gesteuerte Element bewegt, selbst wenn das Stellglied auf der Eingangsseite keine Bewegung ausführt.

Um das Spiel in einem solchen unerwünschten Zustand zu erkennen, ist vorgesehen, dass ein erster Sensor 25 an oder in der Nähe des Stellgliedes 20 angeordnet ist, um eine Wirkbewegung des Stellglied 20 auf der Eingangsseite zu erfassen, und ein zweiter Sensor 45 an oder in der Nähe des gesteuerten Elements 40 angeordnet ist, um eine tatsächliche Bewegung des gesteuerten Elements 40 zu erfassen.

Es ist denkbar, dass stellvertretend für das Signal des ersten Sensors 25 für die Wirkbewegung des Stellgliedes 20 ein Kommandosignal, welches an das Stellglied 20 übergeben wird, verwendet wird. Es kann jedoch vorteilhaft sein, wenn die Wirkbewegung des Stellgliedes 20 unmittelbar von dem ersten Sensor 25 erfasst wird. Das Überwachungssystem wie hierin beschrieben ist zunächst darauf ausgelegt, eine Korrelation bzw. Proportionalität der Bewegungen zwischen Eingangsseite und Ausgangsseite des Systems zu überwachen, wobei sich dies auf die tatsächlichen Bewegungen bezieht und nicht unbedingt auf die auf der Eingangsseite über die Kommandosignale angewiesene Bewegung.

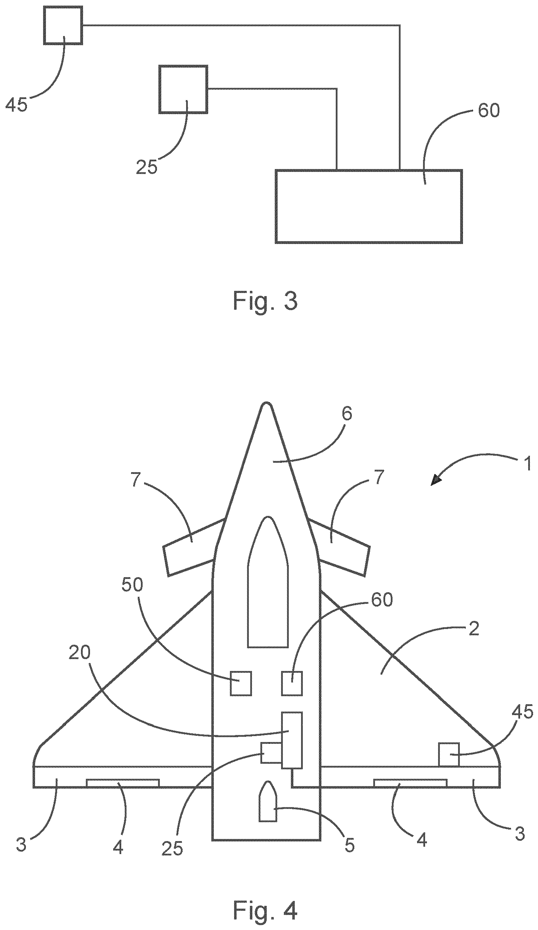

Die von dem ersten Sensor 25 und dem zweiten Sensor 45 ausgegebenen Signale werden herangezogen, um die erwartete Bewegung des gesteuerten Elements basierend auf dem Signal des ersten Sensors 25 und die tatsächliche Bewegung basierend auf dem Signal des zweiten Sensors 45 zu ermitteln und miteinander zu vergleichen. Diese Funktion wird von einer Recheneinheit 60 (siehe Fig. 3) ausgeführt.

Fig. 2 zeigt beispielhaft, wie auf der Eingangsseite des kinematischen Systems das Stellglied 20 von einer Steuerung 50 gesteuert und überwacht wird. In einem Luftfahrzeug kann die Steuerung 50 auch als Flugsteuerrechner bezeichnet werden. Die Steuerung 50 gibt ein Kommandosignal an das Stellglied 20 und der erste Sensor 25 misst eine erfolgte Wirkbewegung des Stellgliedes 20. Diese von dem ersten Sensor 25 gemessene Wirkbewegung des Stellgliedes 20 wird von dem ersten Sensor in ein erstes Signal umgewandelt und an die Steuerung 50 übermittelt. Die Steuerung 50 nutzt dann das erste Signal, um einen Zustand des kinematischen Systems (beispielsweise einer Steuerfläche des Luftfahrzeugs) basierend auf einem Modell zu ermitteln. Dieser Zustand wird von der Steuerung 50 als Grundlage für das Steuern des Luftfahrzeugs ermittelt.

In Ergänzung zu dem in Fig. 1 gezeigten kinematischen System zeigt Fig. 3 auszugsweise eine Verbindung der beiden Sensoren 25, 45 mit der Recheneinheit 60. Die Recheneinheit 60 erhält zusätzlich zu der Steuerung 50 aus Fig. 2 die Signale von dem ersten Sensor 25 und dem zweiten Sensor 45. Die Recheneinheit ermittelt basierend auf dem ersten Signal des ersten Sensors 25 eine erwartete Wirkbewegung auf der Ausgangsseite und vergleicht diese erwartete Wirkbewegung auf der Ausgangsseite mit der von dem zweiten Sensor 45 über ein zweites Signal kommunizierten, tatsächlichen Wirkbewegung auf der Ausgangsseite.

Die Recheneinheit 60 kann die erwartete Wirkbewegung auf der Ausgangsseite unabhängig von der Steuerung 50 ermitteln. Es ist allerdings ebenso denkbar, dass die Recheneinheit 60 mit der Steuerung 50 kommunikativ verbunden ist, und die erwartete Wirkbewegung auf der Ausgangsseite von der Steuerung 50 erhält, weil die Steuerung 50 die erwartete Wirkbewegung auf der Ausgangsseite sowieso für die Zwecke der Flugsteuerung ermittelt.

Stellt die Recheneinheit 60 fest, dass es zwischen der erwarteten Wirkbewegung und der tatsächlichen Wirkbewegung eine Abweichung gibt, welche einen Schwellwert übersteigt, wird eine Meldung ausgegeben, welche auf diese Inkonsistenz bzw. auf dieses Spiel in dem kinematischen System hinweist.

Fig. 4 zeigt beispielhaft ein Luftfahrzeug 1, welches mit einem Überwachungssystem wie mit Bezug zu Fig. 1 bis Fig. 3 beschrieben wurde, ausgestattet ist.

Das Luftfahrzeug 1 in Form eines Flugzeugs weist einen Rumpf 6 auf, an welchem Flügel 2, Höhenleitwerk 7 und Seitenflosse 5 angeordnet sind. Das Höhenleitwerk 7 ist in dem Beispiel der Fig. 4 vor den Flügeln 2 angeordnet. Natürlich kann das Höhenleitwerk 7 auch hinter den Flügeln 2 angeordnet sein. Das Höhenleitwerk 7 kann eine Höhenflosse und ein bewegliches Höhenruder aufweisen. Es sei angemerkt, dass die mit Bezug zu Fig. 4 beschriebenen Prinzipien auf sämtliche Stellflächen (z.B. Höhenruder, Seitenruder, Querruder) an einem Luftfahrzeug, insbesondere einem Flugzeug, angewendet werden können. Aus Übersichtlichkeitsgründen sind an der Seitenflosse 5 und dem Höhenleitwerk 7 keine Ruder eingezeichnet, können aber selbstverständlich vorhanden sein.

An den Flügeln 2 ist jeweils ein Ruder 3 mit einer Klappe 4 angeordnet. In dem Flugzeug ist ein Stellglied 20 angeordnet und über eine kinematische Anordnung (in Fig. 4 der Übersichtlichkeit halber nicht dargestellt) mit einem Ruder 3 verbunden, um das Ruder 3 mit Bezug zu dem Flügel 2 zu bewegen. An dem Stellglied 20 ist ein erster Sensor 25 angeordnet, um eine Wirkbewegung des Stellgliedes 20 zu erfassen. An dem Flügel 2 ist ein zweiter Sensor 45 so angeordnet, dass er eine Bewegung des Ruders 3 mit Bezug zu dem Flügel 2 erfasst.

Der erste Sensor 25 und der zweite Sensor 45 sind mit der Steuerung 50 und der Recheneinheit 60 so verbunden, wie in Fig. 2 und Fig. 3 beispielhaft gezeigt. Somit wird ermöglicht, eine Verbindung und Wirkung zwischen dem Stellglied 20 und dem Ruder 3 zu überwachen und Inkonsistenzen oder Abweichungen zwischen der von dem Stellglied 20 vorgegebenen Bewegung und der von dem Ruder 3 tatsächlich ausgeführten Bewegung zu erfassen bzw. zu ermitteln.

Typischerweise ist für jede Steuerfläche in einem Flugzeug ein eigenes Stellglied vorgesehen, welches ausschließlich einer Steuerfläche zugeordnet ist. Im Zusammenhang mit dem hier beschriebenen Überwachungssystem ist auch für jede Steuerfläche ein eigener Sensor (der oben beschriebene zweite Sensor 45) vorgesehen, welcher die Bewegung jeder Steuerfläche erfasst. Beispielsweise kann die Bewegung der Steuerfläche 3 mit Bezug zu dem Flügel 2 oder dem Rumpf 6 erfasst werden. Betreffend die Klappe 4 kann die Relativbewegung der Klappe 4 zu dem Ruder erfasst werden. Grundsätzlich kann die Relativbewegung eines Ruders zu der zugehörigen Flosse oder dem Rumpf und die Relativbewegung einer Klappe zu dem zugehörigen Ruder erfasst und mit der erwarteten Bewegung verglichen werden. Dies ermöglicht es, ein Spiel in der kinematischen Anordnung, welche ein Stellglied mit der diesem Stellglied zugeordneten Steuerfläche verbindet, zu identifizieren und eine entsprechende Meldung auszugeben, so dass bedarfsorientiert eine weitere Überprüfung eingeleitet werden kann.

Aus Redundanzgründen können an einer Steuerfläche mehr als ein Sensor angeordnet sein.

### Bezugszeichenliste

- 1: Luftfahrzeug
- 2: Flügel
- 3: Ruder
- 4: Klappe
- 5: Seitenflosse
- 6: Rumpf
- 7: Höhenleitwerk
- 10: Überwachungssystem
- 20: Stellglied
- 22: Stellelement
- 23: Gelenk
- 25: erster Sensor
- 30: Kinematik (Hebel, Gelenke, Gestänge)
- 33: Gelenk, Drehpunkt
- 40: gesteuertes Element
- 42: Drehpunkt
- 45: zweiter Sensor
- 50: Steuerung
- 60: Recheneinheit

## Patentansprüche

1. Überwachungssystem (10) zum Überwachen einer kinematischen Kopplung (30) zwischen einem Stellglied (20) und einem gesteuerten Element (40) eines Luftfahrzeugs, wobei das Überwachungssystem aufweist:
einen ersten Sensor (25), der so angeordnet ist, dass er eine Wirkbewegung des Stellgliedes (20) erfasst und basierend auf der erfassten Wirkbewegung des Stellgliedes ein erstes Signal bereitstellt;
einen zweiten Sensor (45), der so angeordnet ist, dass er eine Bewegung des gesteuerten Elements (40) erfasst und basierend auf der erfassten Bewegung des gesteuerten Elements ein zweites Signal bereitstellt;
eine Recheneinheit (60), welche mit dem ersten Sensor (25) und dem zweiten Sensor (45) verbunden ist und ausgestaltet ist, das erste Signal und das zweite Signal zu empfangen;
wobei die Recheneinheit (60) ausgestaltet ist, basierend auf dem ersten Signal eine erwartete Bewegung des gesteuerten Elements zu ermitteln und die erwartete Bewegung mit der dem zweiten Signal entsprechenden erfassten Bewegung zu vergleichen und eine Abweichung zwischen der erwarteten Bewegung und der erfassten Bewegung bereitzustellen;
wobei die Recheneinheit (60) ausgestaltet ist, eine Aufgabe teilweise zu übernehmen, welche üblicherweise in vorgegebenen Wartungsintervallen am Boden durch ein gesondertes Testgerät ausgeführt wird, und diese Aufgabe während eines Betriebs des Luftfahrzeugs in der Luft auszuführen;
wobei die Recheneinheit (60) ausgestaltet ist, bei einer einen Schwellwert übersteigenden Abweichung zwischen der erwarteten Bewegung und der erfassten Bewegung einen Hinweis auf diese Abweichung auszugeben, welcher veranlasst, dass das Luftfahrzeug einer detaillierten Überprüfung zugeführt wird.

2. Überwachungssystem (10) nach Anspruch 1,
wobei die Recheneinheit (60) ausgestaltet ist, die Abweichung zwischen der erwarteten Bewegung und der erfassten Bewegung mit einem Schwellwert zu vergleichen und eine Fehlermeldung auszugeben, wenn die Abweichung den Schwellwert erreicht oder überschreitet.

3. Überwachungssystem (10) nach Anspruch 1 oder 2,
wobei die Recheneinheit (60) ausgestaltet ist, die erwartete Bewegung des gesteuerten Elements (40) basierend auf einem Modell der kinematischen Kopplung (30) zu bestimmen.

4. Überwachungssystem (10) nach einem der vorhergehenden Ansprüche,
wobei sowohl der erste Sensor (25) als auch der zweite Sensor (45) ein Sensor ist, der ausgewählt ist aus der Gruppe umfassend: einen Bewegungssensor, einen Drehratensensor, einen Rotationspositionssensor, einen Winkelsensor, einen linearen variablen Differenzialtransformator, einen optischen Sensor, einen mechanischen Sensor mit beweglichen Teilen, einen magnetischen Sensor, einen Hall-Effekt-Sensor.

5. Überwachungssystem (10) nach einem der vorhergehenden Ansprüche,
wobei der zweite Sensor (45) ausgestaltet ist, die Bewegung des gesteuerten Elements (40) mit einer Abtastrate von mehr als 1 kHz zu erfassen.

6. Überwachungssystem (10) nach einem der vorhergehenden Ansprüche,
wobei die Recheneinheit (60) ausgestaltet ist, das zweite Signal einem Filter zuzuführen und das gefilterte Signal für den Vergleich mit dem ersten Signal zu verwenden.

7. Luftfahrzeug (1), aufweisend ein Überwachungssystem (10) nach einem der vorhergehenden Ansprüche.

8. Luftfahrzeug (1), nach Anspruch 7,
wobei das gesteuerte Element (40) eine Steuerfläche (3, 4) des Luftfahrzeugs (1) ist;
wobei das Stellglied (20) ein mit der Steuerfläche (3, 4) über eine kinematische Kopplung (30) verbundener Aktuator ist.

9. Luftfahrzeug (1) nach Anspruch 8,
wobei der zweite Sensor (45) angeordnet ist, um eine Relativbewegung zwischen der Steuerfläche (3, 4) und einem Rumpf (3) oder einer anderen mit dem Rumpf (3) verbundenen Komponente des Luftfahrzeugs (9) zu erfassen.

10. Luftfahrzeug (1) nach einem der Ansprüche 7 bis 9,
wobei die Recheneinheit (60) Funktionen der Flugsteuerung für das Luftfahrzeug implementiert.

## Claims

1. Monitoring system (10) for monitoring a kinematic coupling (30) between an actuator (20) and a controlled element (40) of an aircraft, wherein the monitoring system comprises:
a first sensor (25), which is arranged such that it senses an operative movement of the actuator (20) and, on the basis of the sensed operative movement of the actuator, provides a first signal;
a second sensor (45), which is arranged such that it senses a movement of the controlled element (40) and, on the basis of the sensed movement of the controlled element, provides a second signal;
a computing unit (60), which is connected to the first sensor (25) and the second sensor (45) and is designed to receive the first signal and the second signal;
wherein the computing unit (60) is designed to determine, on the basis of the first signal, an anticipated movement of the controlled element and to compare the anticipated movement with the sensed movement corresponding to the second signal and to provide a deviation between the anticipated movement and the sensed movement;
wherein the computing unit (60) is designed to partially undertake a task which is usually carried out by a dedicated testing apparatus at predefined maintenance intervals on the ground, and to carry out this task during operation of the aircraft in the air;
wherein the computing unit (60) is designed to respond to a deviation between the anticipated movement and the sensed movement that exceeds a threshold value by outputting a warning of this deviation, causing the aircraft to be sent for detailed inspection.

2. Monitoring system (10) according to Claim 1,
wherein the computing unit (60) is designed to compare the deviation between the anticipated movement and the sensed movement with a threshold value and to output an error message if the deviation reaches or exceeds the threshold value.

3. Monitoring system (10) according to Claim 1 or 2, wherein the computing unit (60) is designed to determine the anticipated movement of the controlled element (40) on the basis of a model of the kinematic coupling (30).

4. Monitoring system (10) according to one of the preceding claims, wherein both the first sensor (25) and the second sensor (45) are sensors selected from the group comprising: a movement sensor, an angular rate sensor, a rotational position sensor, an angle sensor, a linear variable differential transformer, an optical sensor, a mechanical sensor with moving parts, a magnetic sensor and a Hall effect sensor.

5. Monitoring system (10) according to one of the preceding claims, wherein the second sensor (45) is designed to sense the movement of the controlled element (40) at a scanning rate of more than 1 kHz.

6. Monitoring system (10) according to one of the preceding claims, wherein the computing unit (60) is designed to feed the second signal to a filter and to use the filtered signal for the comparison with the first signal.

7. Aircraft (1), having a monitoring system (10) according to one of the preceding claims.

8. Aircraft (1) according to Claim 7,
wherein the controlled element (40) is a control surface (3, 4) of the aircraft (1);
wherein the actuator (20) is an actuator connected to the control surface (3, 4) by way of a kinematic coupling (30) .

9. Aircraft (1) according to Claim 8,
wherein the second sensor (45) is arranged so as to sense a relative movement between the control surface (3, 4) and a fuselage (3) or another component of the aircraft (9) that is connected to the fuselage (3).

10. Aircraft (1) according to one of Claims 7 to 9,
wherein the computing unit (60) implements functions of the flight control for the aircraft.

## Revendications

1. Système de surveillance (10) pour surveiller un accouplement cinématique (30) entre un actionneur (20) et un élément commandé (40) d'un aéronef, le système de surveillance comprenant :
un premier capteur (25) qui est agencé de manière à détecter un mouvement actif de l'actionneur (20) et à fournir un premier signal basé sur le mouvement actif détecté de l'actionneur ;
un deuxième capteur (45) qui est agencé de manière à détecter un mouvement de l'élément commandé (40) et à fournir un deuxième signal basé sur le mouvement détecté de l'élément commandé ;
une unité de calcul (60) qui est connectée au premier capteur (25) et au deuxième capteur (45) et qui est conçue pour recevoir le premier signal et le deuxième signal ;
l'unité de calcul (60) étant conçue de façon à déterminer, sur la base du premier signal, un mouvement attendu de l'élément commandé et à comparer le mouvement attendu avec le mouvement détecté correspondant au deuxième signal et pour fournir un écart entre le mouvement attendu et le mouvement détecté ;
l'unité de calcul (60) étant conçue de façon à prendre en charge partiellement une tâche qui est habituellement exécutée au sol par un appareil de test séparé, à des intervalles de maintenance prédéterminés, et à exécuter cette tâche pendant un fonctionnement de l'aéronef dans les airs ;
l'unité de calcul (60) étant conçue, en cas d'écart dépassant une valeur seuil entre le mouvement attendu et le mouvement détecté, pour émettre une indication de cet écart, ce qui provoque une inspection détaillée de l'aéronef.

2. Système de surveillance (10) selon la revendication 1,
dans lequel l'unité de calcul (60) est conçue de façon à comparer l'écart entre le mouvement attendu et le mouvement détecté avec une valeur seuil, et à émettre un message d'erreur si l'écart atteint ou dépasse la valeur seuil.

3. Système de surveillance (10) selon la revendication 1 ou la revendication 2,
dans lequel l'unité de calcul (60) est conçue de façon à déterminer le mouvement attendu de l'élément commandé (40) sur la base d'un modèle de l'accouplement cinématique (30).

4. Système de surveillance (10) selon l'une des revendications précédentes, dans lequel le premier capteur (25) et le deuxième capteur (45) sont tous deux des capteurs choisis dans le groupe comprenant : un capteur de mouvement, un capteur de vitesse de rotation, un capteur de position en rotation, un capteur d'angle, un transformateur différentiel linéaire variable, un capteur optique, un capteur mécanique à parties mobiles, un capteur magnétique, un capteur à effet Hall.

5. Système de surveillance (10) selon l'une des revendications précédentes, dans lequel le deuxième capteur (45) est conçu de façon à détecter le mouvement de l'élément commandé (40) avec une fréquence d'échantillonnage supérieure à 1 kHz.

6. Système de surveillance (10) selon l'une des revendications précédentes, dans lequel l'unité de calcul (60) est conçue de façon à appliquer le deuxième signal à un filtre et pour utiliser le signal filtré pour la comparaison avec le premier signal.

7. Aéronef (1) comprenant un système de surveillance (10) selon l'une des revendications précédentes.

8. Aéronef (1) selon la revendication 7,
dans lequel l'élément commandé (40) est une gouverne (3, 4) de l'aéronef (1) ;
dans lequel l'actionneur (20) est un actionneur relié à la gouverne (3, 4) par un accouplement cinématique (30).

9. Aéronef (1) selon la revendication 8,
dans lequel le deuxième capteur (45) est agencé pour détecter un mouvement relatif entre la gouverne (3, 4) et un fuselage (3) ou un autre composant de l'aéronef (9) relié au fuselage (3).

10. Aéronef (1) selon l'une des revendications 7 à 9,
dans lequel l'unité de calcul (60) met en œuvre des fonctions de commande de vol pour l'aéronef.
